# EUROPEAN PATENT APPLICATION

(11) **EP 2 323 310 A1**
(43) Date of publication of application: **18.05.2011**
(21) Application number: 09306093.7
(22) Date of filing: 13.11.2009
(51) Int. Cl.: H04L 12/24

(54) **A method of managing a network resource, corresponding computer program product, and data storage device therefor**

(71) Applicant: Alcatel Lucent, 75008 Paris (FR)
(72) Inventor: Roessler, Horst, 70794 Filderstadt (DE); Grob-Lipski, Heidrun, 72181 Starzach (DE)
(74) Representative: Brose, Gerhard

(57) **Abstract**

The invention concerns a method of managing a network resource, the method comprising the steps of monitoring (101) a status of the network resource; in response to a change in the status, propagating (102) the status to a further network resource; receiving (103) a traffic contract from a network application; reserving (104) the network resource; monitoring (105) an achieved level of performance based on the traffic contract; and controlling (106) the network resource based on the achieved level of performance. The invention further concerns a computer program product and a device therefor,

## Description

### Field of the Invention

The invention relates to a method of managing a network resource according to claim 1, a computer program product according to claim 9, and a data storage device according to claim 10.

### Background

Network resource management is a methodology used in broadband networks to keep track of the way link resources are allocated to connections. Two primary resources that are commonly tracked by network resource management are capacity, that is, bandwidth, and connection identifiers. Network resource management monitors and controls the allocation of capacity to connections when requested as part of the connection setup process.

In the context of network resource management, the term quality of service (QoS) commonly refers to resource reservation control mechanisms rather than to the achieved service quality per se. Within this meaning, QoS is the ability to provide different priority to different applications, users, or data flows, or to guarantee a certain level of performance to a data flow. For example, a bit rate, delay, jitter, packet dropping probability and/or bit error rate may be warranted. QoS guarantees are important if the network capacity is insufficient, especially for real-time streaming multimedia applications such as Voice over Internet Protocol (VoIP), online games and IP-TV, since these often require a fixed bit rate and are sensitive to delay. QoS is equally critical in networks where the capacity is a limited resource, such as in cellular data communication.

A network or protocol that supports QoS may agree on a so-called traffic contract with the application software and reserve capacity in the network nodes, for example, during a session establishment phase. Inter alia, the traffic contract may comprise information such as the kind of traffic to be transported by the network and the performance requirements of such traffic. During the session, the network or protocol may monitor the achieved level of performance, for example, the data rate and delay, and dynamically control scheduling priorities in the network nodes. Finally, the reserved capacity may be released during a tear-down phase.

One such resource reservation control mechanism has been specified by the Internet Engineering Task Force (IETF) under the name of Resource Reservation Protocol. (RSVP) and has been proposed by the IETF Network Working Group as a standard in Request for Comments (RFC) 2205, which, provides a comprehensive introduction to the protocol standard on pages 1 to 18. With RSVP, resources are reserved across the network for each call as it is set up.

A major downside of RSVP lies in its inability to provide immediate feedback to a resource request.

### Summary

It is an object of the invention to present an improved approach to network resource management that enables a network application to reserve any network resource with reduced overhead, obtaining instantaneous feedback.

This object is achieved by a method according to claim 1, a computer program product according to claim 9, or a data storage device according to claim, 10.

A main idea of the invention is to proactively propagate the status of a network resource to an associated network resources.

Further developments of the invention can be gathered from the dependent claims and the following description.

In the following the invention will be explained further making reference to the attached, drawing.

To manage a network resource according to an embodiment of the invention, the network resource is monitored to determine its status. In response to a change in the status, the latter is propagated to a further network resource. Once a traffic contract is received from a network application, the network resource is reserved, and the level of performance achieved is monitored based on the traffic contract. Ultimately, the determined level of performance serves as a basis for controlling the network resource.

### Brief Description of the Figures

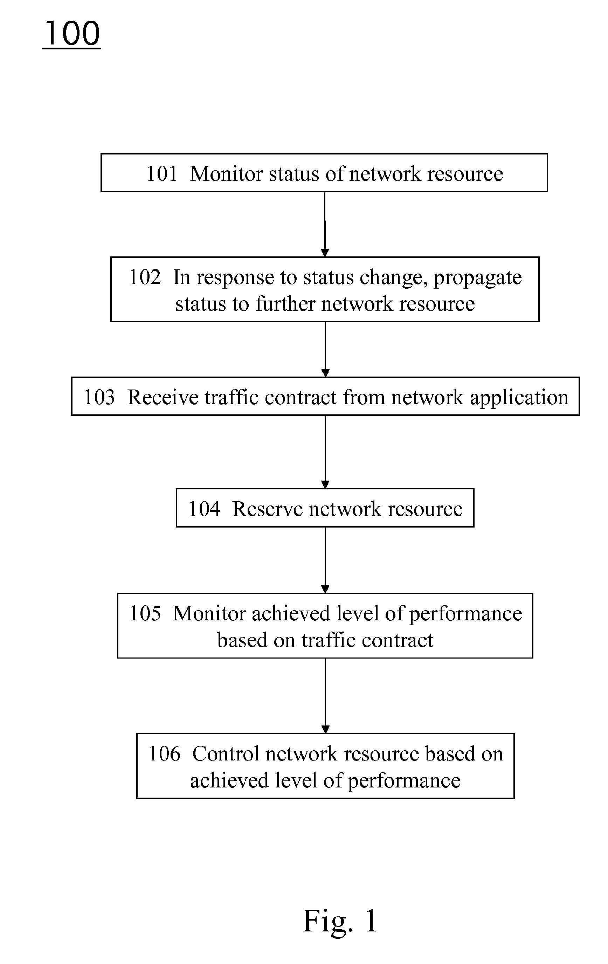

Fig. 1 shows a flowchart depicting a method according to an embodiment of the invention.

### Description of the Embodiments

In the following, a method according to the invention is elucidated by way of example, referencing- Fig, 1.

The flowchart 100 of Fig. 1 comprises a first processing step 101, a second processing step 102, a third processing step 103, a fourth processing step 104, a fifth processing step 105, and a sixth processing step 106, each represented by a rectangle. A flow of control passing through the processing steps 101 to 106 is represented by a set of arrows. An arrow starting at a first symbol and ending at a second symbol indicates that control passes from the first symbol to the second symbol.

In the embodiment at hand, the method is applied to a network resource forming a part of a computer network, that is, a group of computers that are connected to each other for the purpose of communication. Herein, by computer is meant any machine that manipulates data according to a set of instructions. The resulting network may be based on, inter alia, optical fiber, Ethernet, wireless LAN, HomePNA, power line communication, or G.hn technology. In this example, the network resource takes the form of hardware, that is, a physical device, such as a network hub, switch, bridge, or router. This resource is interconnected with other hosts or nodes, that is, connection points, in the computer network. Any such connection is effected by means of physical and logical network components collectively called the link in the art of computer networking, typically governed by a link protocol that operates on adjacent nodes of the network.

To optimize utilization of available link capacity, minimize response times and increase the robustness of communication, the computer network is based on packet switching, that is, a digital network communications method that groups all transmitted data, irrespective of content, type, or structure, into suitably sized blocks called packets. The packet switching network at hand is a shared network which routes each packet independently from all others and allocates transmission resources as needed.

In the first step 101, the network resource is monitored to determine its current status. As a result, any degradation of the associated link is detected as soon as it occurs. According to the term's meaning in communications, by degradation is meant any temporal or physical condition in which one or more of the required performance parameters fall outside predetermined limits, potentially jeopardizing the anticipated quality of service. Some examples of degradation that may affect the network resource's status are known as runt pulse, spike, jitter, wander, swim, drift, glitch, ringing, crosstalk, antenna effect, and phase noise. To reflect further characteristics of the link, the status is adapted to include metrics such as the available bandwidth (ABW), packet loss rate (PLR), roundtrip time (RTT), delay variation, or long-term throughput (LTT) detested. The article "Link Characteristics Estimation For IEEE 802.11 DCF Based WLAN", published by the IEEE Computer Society in the Proceedings of the 25th Annual IEEE International Conference on Local Computer Networks' (LCN' 04), provides a detailed definition of each of these metrics, which is hereby incorporated by reference.

In the second step 102, upon detecting a change in the status monitored in the first step 101, the network resource propagates its updated status to a further network resource. To reflect the semantics of the overall network, the network resource and the further network resource form part of an ontology of the network's resources. In information science, by ontology is meant a formal representation of a set of concepts within a domain and the relationship between those concepts. By providing a formal, explicit specification of this shared conceptualization, the network ontology thus can be used to reason about the properties of the network, and may be used to define the network as a whole. Simply put, the ontology provides a shared vocabulary that serves to model the entire, network - that is, the type of resources that exist, their properties and relations. To classify the relationship between the network, resource and the further network resource within the resulting ontology, both resources form part of a hierarchy, that is, an arrangement of network resources, in which these items are represented as being "above," "below," or "at the same level as" one another and with only one "neighbor" above and below each level.

To apply the update to one or more of its superiors, the network resource propagates the status to its direct superior. Here, by superior is meant any higher-level network resource within the hierarchy, commonly called the parent in the context of data structures. Additionally, to maintain consistency with its peers, the network resource propagates that same information to its sibling, that is, an adjacent network resource at the same level.

In the third step 103, a network application indicates to the computer network that it wishes to transport a particular kind of traffic by presenting a traffic contract, indicating requirements such as the type of service, the traffic parameters of each data flow in one or both directions, or the QoS parameters for each direction. In broadband networking, this information is commonly called the traffic descriptor for the requested connection. For example, if the computer network is based on asynchronous transfer mode (ATM) technology, the traffic descriptor may indicate the type of service required by specifying any of the ATM Forum Traffic Management 4.0 ATM Service Categories, namely Constant Bit Rate (CBR) Real-Time Variable Bit Rate (rt-VBR), Non-Real-Time Variable Bit Rate (nrt-VBR) Available Bit Rate (EBR), or Unspecified Bit Rate (UBR). To ensure performance of the traffic contract, the network resource is selected, based on the type and parameters of the service requested. If the network application makes use of RSVP, the traffic contract may take the form of an RSVP QoS request. Within the terminology of this protocol, the QoS request is then passed to a local decision module called "admission control", which in turn would determine whether a network node has sufficient available resources to supply the requested QoS. To facilitate packet forwarding, that is, the transit of logically addressed packets from their source toward their ultimate destination through intermediate nodes, the traffic contract also serves as a basis for the selection of a path in the computer network along which to send network traffic, such selection being commonly known as routing or routeing. Given a predetermined route, called the primary path, the network resource, according to its status, may become unavailable or fail to meet the requirements, laid down in the traffic contract. In this case, in an additional step (not depicted), a rerouting is triggered, resulting in the selection of an alternative, or backup, path.

In the fourth step 104, the network resource is reserved. More specifically, the hardware resource is allocated, that is, set aside, for the purpose of satisfying the requirements of the network application indicated in the traffic contract received in the third step 103. In an alternative embodiment where the network resource is a virtual resource, such as a network segment, rather than a physical one, reservation may entail the delegation of an allocation request to one or more of its subordinates. Here, by subordinate is meant any lower-level network resource within the hierarchy, commonly called a child in the context of data structures,

In the context of QoS-aware networks and protocols, the third step 103 and the fourth step 104 would be attributed, to what is known in the art as the session establishment phase. Accordingly, the subsequent fifth step 105 and sixth step 106 would be considered to constitute what is commonly called the session.

In the fifth step 105, the achieved level of performance is monitored, taking into account the traffic contract received in the third step 103. To effectively emulate application behavior, such monitoring may make use of active measurement, that is, the transmission and reception of test packets. Active measurement may be based on established protocol standards such as Internet Control Message Protocol (ICMP) "echo request" packets in case of the Internet. Alternatively, it may be based on proprietary agent software or other tools.

To allow for a more precise evaluation of QoS parameters and avoid the extra load imposed on the computer network by the transmission of test packets, an alternative embodiment may make use of passive measurement for QoS monitoring. This technique may encompass the need for specialized hardware to assess the behavior of actual user traffic. These so-called QoS probes are then installed at desired measurement points throughout the computer network, and the generated measurement data transferred to and collected on a dedicated computer on which appropriate management software is configured to calculate the achieved level of performance.

In the sixth step 106, this calculated level of performance serves as a basis for an ongoing control of the network resource. Among other aspects, such control typically includes the dynamic adaptation of scheduling priorities in the corresponding network node. For example, the network application of the third step 103 may take the form of a VoIP or video tele-conference (VTC) system. In this case, the service quality could suffer from packet jitter in the computer network, that is, the variability over time of the packet latency across the network. Under adverse conditions, the jitter measured may exceed the limit established in the traffic contract received in the third step 103. Assuming that the hardware resource maintains a queue of data packets to be forwarded, those packets associated_{'} with the VoIP or VTC application are then given precedence over packets associated with other network applications. To maintain regular operation, some bandwidth is still allocated by default to network control packets originating from ICMP and routing protocols, while any remaining bandwidth is typically employed for best-effort traffic.

Finally, in an optional seventh step (not depicted), the reserved capacity is released in what is known in the context of QoS as the tear-down phase.

A person of skill in the art would readily recognize that steps of various above-described methods can be performed by programmed computers. Herein, some embodiments are intended to cover program storage devices, e.g., digital data storage media, which are machine or computer readable and encode machine-executable, or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of managing a network resource, the method comprising the steps of
receiving (103) a traffic contract from a network application,
reserving (104) the network resource,
monitoring (105) an achieved level of performance based on the traffic contract,
controlling (106) the network resource based on the achieved level of performance,
**characterized in that** the method comprises the further steps of
monitoring (101) a status of the network resource and, in response to a change in the status, propagating (102) the status to a further network resource.

2. A method according to claim 1, **characterized in that** the network resource and the further network resource form part of a hierarchy of network resources and the step of propagating (102) the status comprises propagating the status from the network resource to a parent network resource and aggregating the status with a further status by the parent network resource.

3. A method according to claim 1 or 2, **characterized in that** the network resource and the further network resource form part of a hierarchy of network resources and the step of propagating (102) the status comprises propagating the status from the network resource to a sibling network resource and aggregating the status with a further status by the sibling network resource,

4. A method according to any of the preceding claims, **characterized in that** the method comprises the further step of selecting the network resource from a plurality of network resources based on the traffic contract.

5. A method according to any of the preceding claims, **characterized in that** the network resource forms a node of a computer network, and the method, comprises: the further step of selecting a primary path in the computer network based on the traffic contract, wherein the primary path comprises a plurality of nodes of the computer network.

6. A method according to claim 5, **characterized in that** the method comprises the further step of selecting a backup path in the computer network in response to at least one of the following:
an unavailability of a node in the primary path and
a failure of a node in the primary path to perform the traffic contract.

7. A method according to any of the preceding claims, **characterized in that** the network resource forms part of a hierarchy of network resources and the method comprises the further step of delegating an allocation request to a child network resource.

8. A method according to any of the preceding claims, **characterised in that** the network resource forms part of a hierarchy of network resources and the method comprises the further step of delegating an update request.

9. A computer program product comprising computer-executable instructions for performing a method when the program is run on a computer, the method comprising the steps of
receiving (103) a traffic contract from a network application,
reserving (104) a network resource,
monitoring (105) an achieved level of performance based on the traffic contract,
controlling (106) the network resource based on the achieved level of performance,
**characterized in that** the method comprises the further steps of
monitoring (101) a status of the network resource and, in response to a change in the status, propagating (102) the status to a further network resource.

10. A device programmed or configured to perform a method comprising the steps of
receiving (103) a traffic contract from a network application,
reserving (104) a network resource,
monitoring (105) an achieved level of performance based on the traffic contract,
controlling (106) the network resource based on the achieved level of performance,
**characterized in that** the method comprises the further steps of
monitoring (101) a status of the network resource and, in response to a change in the status, propagating (102) the status to a further network resource.
